# FASCICULE DE BREVET EUROPEEN

(11) **EP 2 867 067 B1**
(45) Date de publication et mention de la délivrance du brevet: **27.04.2016**
(21) Numéro de dépôt: 13744655.5
(22) Date de dépôt: 28.06.2013
(51) Int. Cl.: B60R 5/04

(54) **DISPOSITIF D'OCCULTATION D'UN RECEPTACLE AVEC ARRET INTERMEDIAIRE A AIGUILLAGE ET VEHICULE AUTOMOBILE CORRESPONDANT**
VORRICHTUNG ZUM ABDECKEN EINES BEHÄLTERS MIT EINEM ZWISCHENSTOPPSCHALTER UND ENTSPRECHENDES KRAFTFAHRZEUG
DEVICE FOR COVERING A RECEPTACLE WITH AN INTERMEDIATE STOP SWITCH AND CORRESPONDING MOTOR VEHICLE

(30) Priorité: 29.06.2012 FR 1256250
(43) Date de publication de la demande: 06.05.2015
(73) Titulaire: Peugeot Citroën Automobiles SA, 78140 Vélizy Villacoublay (FR)
(72) Inventeur: REBEL, Vincent, F-75010 Paris (FR); ROUSSEAU, Frederic, F-78730 Ponthevrard (FR)
(86) Numéro de dépôt international: PCT/FR2013/051518
(87) Numéro de publication internationale: WO 2014/001731

(56) Documents cités:
- EP-A1- 1 524 152
- FR-A1- 2 848 501

## Description

L'invention concerne un dispositif d'occultation d'un réceptacle tel qu'un espace de chargement d'un véhicule de type break ou utilitaire permettant d'occulter le réceptacle entièrement, tout en fournissant une position intermédiaire avant de réaliser éventuellement l'ouverture ou la fermeture complète du dispositif d'occultation.

Il est connu de réaliser des dispositifs d'occultation permettant d'assurer la fermeture ou l'ouverture complète d'un espace de chargement d'un véhicule de type break ou utilitaire, mais ces dispositifs ne possèdent pas de position intermédiaire spécifique, à moins que le dispositif d'occultation soit motorisé à commande électrique séquentielle pour l'arrêter suivant le souhait de l'utilisateur. Malgré tout, l'utilisateur se doit d'activer la commande et la relâcher à sa guise.

Dans l'état de la technique, le document FR2848501 décrit un dispositif d'occultation pour véhicule automobile, sous forme d'une toile mobile entre une positions repliée et au moins deux positions déployées, et guidée par au moins un organe d'entrainement mobile le long de deux rails de guidage, ledit organe d'entrainement portant à ses extrémités des éléments coulissants circulant à l'intérieur desdits rails, lesdits rails, présentant, sur au moins une portion du parcours de l'élément coulissants correspondant, deux rainures parallèles et reliées au moins aux extrémités de la rainure la plus courte, une premier rainure, dite piste aller, étant dédiée au déploiement de ladite toile et une seconde rainure, dite piste retour, étant dédiée au repliement, et lesdits rails présentant au moins un élément d'arrêt en une position intermédiaire de déploiement de ladite toile, ménagé entre lesdites rainures et prévu pour recevoir et maintenir l'élément coulissants correspondant. Ce dispositif permet d'obtenir une position intermédiaire mais il doit être manoeuvré manuellement par l'utilisateur, pour se caler dans la position souhaitée. En outre, les rails de guidage présentent deux rainures interrompus par des éléments d'arrêts sous forme de crans et d'ergots positionnés judicieusement pour diriger et ou bloquer le doigt de l'organe d'entrainement, de la toile mobile, afin de le déplacer d'une rainure à l'autre. On comprend que la conception des rails de guidage est minutieuse et que leur utilisation est problématique au niveau du guidage et nécessite l'utilisation des deux mains de l'utilisateur pour réaliser les différentes manoeuvres.
Par conséquent, dans l'état de la technique, on ne connaît pas de dispositif d'occultation mécanique apte à se placer naturellement dans une position intermédiaire de la toile déployée. Cette manoeuvre peut-être particulièrement avantageuse pour l'utilisateur notamment dans le cas où celui-ci a les bras chargés en vue de placer les charges dans l'espace de chargement d'un véhicule de type breaks ou utilitaire. Le hayon du véhicule peut s'ouvrir automatiquement par exemple par un système à ouverture mains libre, par contre le dispositif d'occultation étant déployé, l'utilisateur n'a pas accès directement à l'espace de chargement, il doit reployer au moins partiellement la toile du dispositif d'occultation, sans s'aider des mains, afin de pouvoir déposer ses charges sans effort dans l'espace de chargement et ainsi libérer ses mains.

L'invention a pour but de palier les inconvénients de l'art antérieur en proposant un dispositif d'occultation autorisant par une manipulation simple le reploiement de la toile dans une position intermédiaire.

A cet effet l'invention propose un dispositif d'occultation d'un espace de chargement comportant une toile mobile entre une position repliée et au moins deux positions déployées, guidée par un élément d'entraînement le long de deux rails de guidage, l'élément d'entraînement portant à ses extrémités des patins coulissants à l'intérieur d'une rainure rectiligne continue desdits rails, et en ce que lesdits rails présentent sur une position intermédiaire du parcours des rails un aiguillage et une rainure en forme de V se raccordant sur la rainure rectiligne continue.

Avantageusement, le fond de la rainure en V comporte un redan formant une butée.

Selon une variante, le redan se prolonge par une zone en creux de dégagement.

Selon un autre mode de réalisation de l'invention, la rainure en V est délimitée par un élément de guidage constituant la partie centrale du V.

De manière optionnelle, l'élément de guidage est rectiligne sur sa surface supérieure dans le prolongement de la rainure rectiligne et possède une forme sensiblement en V dans sa partie inférieure, arrondie à sa base, délimitant la rainure en V.

Selon un mode de réalisation préféré de l'invention, l'élément de guidage est équipé d'un clapet d'aiguillage, à l'extrémité opposée à celle de l'enrouleur.

Selon une variante, le clapet d'aiguillage comprend un moyen élastique permettant d'obturer la rainure rectiligne.

Avantageusement, le clapet d'aiguillage en position ouvert, lors du retrait de la toile mobile permet le passage du patin dans la rainure en V et son appui contre le redan.

De façon avantageuse, le patin a une section de forme rectangulaire est placé dans une position intermédiaire du parcours, par un appui sur le pan de la toile mobile subit une rotation autour de l'arrondi de l'élément de guidage qui le dégage de sa butée sur le redan, par traction de la toile mobile le tire dans le dégagement et via la rainure jusqu'à l'enrouleur.

L'invention concerne également un véhicule automobile comprenant un dispositif d'occultation d'un espace de chargement, ayant les caractéristiques susmentionnées.

L'invention sera bien comprise et d'autres aspects et avantages apparaîtront clairement à la lecture de la description qui suit donnée à titre d'exemple par rapport aux figures annexées sur lesquelles :
- la figure 1 présente une vue en perspective d'un dispositif d'occultation démuni sur sa bordure droite de son rail de guidage.
- la figure 2 présente une vue schématique de profil montrant un système d'arrêt intermédiaire d'un rail de guidage dans lequel un patin lié à la toile est représenté dans une configuration de tirage de la toile mobile, suivant l'invention.
- la figure 3 présente une vue schématique de profil montrant un système d'arrêt intermédiaire d'un rail de guidage dans lequel un patin lié à la toile est représenté dans une configuration de retrait de la toile mobile, suivant l'invention dans sa position d'arrêt intermédiaire.
- la figure 4 présente une vue schématique de profil montrant un système d'arrêt intermédiaire d'un rail de guidage dans lequel un patin lié à la toile est représenté dans une configuration de retrait de la toile mobile, suivant l'invention dans sa position de déblocage de l'arrêt intermédiaire pour effectuer le retrait total de la toile mobile.

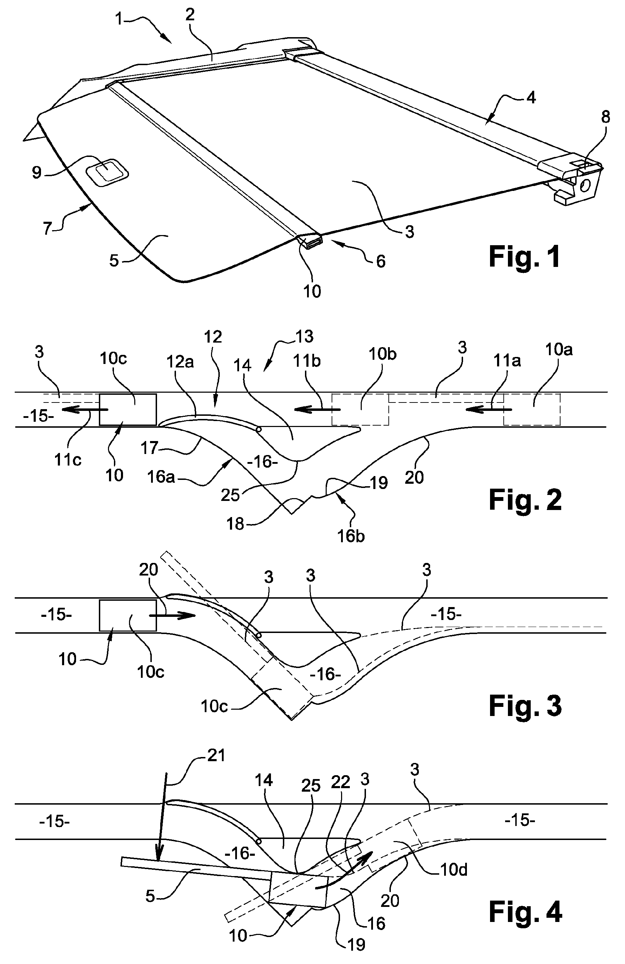

La figure 1 présente une vue en perspective d'un dispositif d'occultation 1 comportant deux rails de guidage 2, dont un seul (le rail gauche sur la figure) est représenté. De façon classique, le dispositif 1 comprend une toile souple 3 susceptible de se replier sur un enrouleur 4 qui est placé plus généralement derrière la deuxième rangée de siège d'un véhicule (non représentée) afin de recouvrir un espace de chargement, de manière à masquer la diversité des objets entreposés dans l'espace de chargement. L'enrouleur 4 comprend à chacune de ses extrémités des moyens de fixation 8 rapide et amovible sur la garniture placée sur les côtés de l'espace de chargement. Du côté de son extrémité opposée, la toile mobile 3 possède un élément d'entraînement constitué d'une barre de tirage 6 portant à chacune de ses extrémités un patin 10 monté dans une rainure du rail de guidage 2. La barre de tirage 6 est parallèle à l'enrouleur 4 et perpendiculaire aux rails de guidage 2 dans lesquels les patins 10 sont susceptibles de se déplacer. La barre de guidage 6 se prolonge par un pan rigide 5 dont la bordure 7 est destinée à se conformer au profil intérieur du hayon ou du moyen de fermeture. Le pan rigide 5 est solidaire de la barre de tirage 6 et peut donc l'orienter suivant une amplitude déterminée. De plus, le pan rigide 5 comporte une poignée 9 qui peut être rétractable pour faciliter le tirage ou le retrait de la toile souple mobile 3.

La figure 2 présente une vue schématique de profil montrant un système d'arrêt 13 intermédiaire d'un rail de guidage 2 dans lequel un patin 10, lié à la toile souple 3, est représentée dans une configuration de tirage de ladite la toile mobile 3. Sur cette vue, la toile mobile 3 est en traction en vue de recouvrir l'espace de chargement. Le déplacement du patin 10 suit une trajectoire rectiligne. Le patin 10 est représenté en trait plein et/ou interrompu dans différentes phases de son déplacement. Le patin 10a est représenté en phase de traction suivant la flèche 11a dans la partie courante du rail 2, puis le patin 10b est représenté en phase de traction suivant la flèche 11b en passage au-dessus d'un élément de guidage 14 et de l'aiguillage 12 et, enfin le patin 10c est représenté en phase de traction suivant la flèche 11c dans une configuration où il a fléchi le clapet d'aiguillage 12a pour obtenir le passage. Le patin 10c est représenté en phase de traction suivant la flèche 11c, après le passage du système d'arrêt intermédiaire 13, jusqu'à l'accroche de la toile mobile dans une position de recouvrement de l'espace de chargement.
Dans cette action de mise en place de la toile mobile, le système d'arrêt 13 intermédiaire est inopérant. Le rail de guidage 2 comprend une rainure rectiligne 15 sur laquelle dans une zone intermédiaire du parcours de la rainure 15, une autre rainure 16 en forme de V se raccorde. La rainure 16 en V est délimitée par une pièce 14 formant un élément de guidage disposé dans la partie centrale du de la forme en V. Du côté du point d'accrochage de la toile mobile 3, se trouve d'une part, le clapet d'aiguillage 12a fixé élastiquement sur l'arrête 14a de l'élément de guidage 14 de manière que le clapet d'aiguillage 12a demeure constamment ouvert, afin de diriger le patin 10 vers l'intérieur de la rainure en V 16 et, d'autre part, une partie courbe 17 permettant de raccorder la partie rectiligne de la rainure 15 avec l'aile 16a de la rainure en V 16 dont l'autre aile 16b comporte un redan 18 formant une butée d'arrêt. L'extrémité du redan 18 se prolonge par un dégagement 19, puis un rayon de courbure 20 se raccordant sur la rainure 15 rectiligne en direction de l'enrouleur 4(non représenté sur la figure). L'élément de guidage 14 possède une surface supérieure plane 14a assurant la continuité de la partie inférieure du rail de guidage 15 et une partie inférieure en forme de V 14b arrondie 25 à la base du V. Le V 14b se raccordant sur la surface supérieure plane 14a.

La figure 3 présente une vue schématique de profil montrant un système d'arrêt 13 intermédiaire d'un rail de guidage 2 dans lequel un patin 10 lié à la toile mobile 3 est représenté dans une configuration de retrait de ladite toile mobile 3, suivant l'invention dans sa position d'arrêt intermédiaire. Ainsi, lorsque l'utilisateur souhaite découvrir partiellement son espace de chargement. Il décroche la toile mobile 3 qui sous la traction de l'enrouleur 4 suivant la traction symbolisée par la flèche 20 via le patin 10c coulisse dans la rainure rectiligne 15 et par l'aiguillage 12 est guidé en butée sur le redan 18 où le patin 10d représenté en traits interrompus ainsi que la toile mobile 3 est maintenu dans une position intermédiaire, bloquant alors ladite toile mobile 3 dans une position mi-ouverte, mi-fermée mais dégageant suffisamment de place pour y déposer des objets ou des courses.

La figure 4 présente une vue schématique de profil montrant un système d'arrêt 13 intermédiaire d'un rail de guidage 15 dans lequel un patin 10 lié à la toile souple 3 est représenté dans une configuration de retrait de ladite toile mobile 3, suivant l'invention dans sa position de déblocage de l'arrêt intermédiaire pour effectuer le retrait total de la toile mobile 3. Afin de réaliser l'enroulement de la toile mobile 3 sur l'enrouleur 4, l'utilisateur exerce une pression suivant la flèche 21 sur l'extrémité du pan 5, afin de sortir le patin 10 de son appui sur le redan 18, de manière à lui imprimer un mouvement de rotation par appui de sa partie supérieure sur l'arrondi 17 de la base du V de l'élément de guidage 14. L'extrémité du patin 10 sous la traction de la toile mobile 3 tirée par l'enrouleur 4 suivant la flèche 22 s'oriente et se libère dans le dégagement pour suivre la rainure 16 et le patin 10d représenté en traits interrompus ainsi que la toile mobile 3 coulisse sur la courbe 20, puis dans la rainure rectiligne 15 jusqu'à venir en butée sur l'enrouleur (non représenté).

## Revendications

1. Dispositif (1) d'occultation d'un espace de chargement comportant une toile mobile (3) entre une position repliée et au moins deux positions déployées, guidée par un élément d'entraînement (6) le long de deux rails (2) de guidage, l'élément d'entraînement (6) portant à ses extrémités des patins (10) coulissants à l'intérieur d'une rainure rectiligne (15) continue desdits rails (2), **caractérisé en ce que** lesdits rails (2) présentent sur une position intermédiaire du parcours des rails, un aiguillage (12) et une rainure en forme de V (16) se raccordant sur la rainure rectiligne (15) continue, apte à permettre l'arrêt et/ou le coulissement des patins (10), dans une position intermédiaire.

2. Dispositif (1) selon la revendication 1, **caractérisé en ce que** le fond de la rainure en V (16) comporte un redan (18) formant une butée.

3. Dispositif (1) selon la revendication 2, **caractérisée en ce que** le redan (18) se prolonge latéralement par une zone en creux (19) de dégagement.

4. Dispositif selon l'une des revendications précédentes, **caractérisée en ce que** la rainure en V (16) est délimitée par un élément de guidage (14) constituant dans la partie centrale du V (16).

5. Dispositif (1) selon la revendication 4, **caractérisée en ce que** l'élément de guidage (14) est rectiligne sur sa surface supérieure dans le prolongement de la rainure rectiligne (15) et possède une forme sensiblement en V dans sa partie inférieure, arrondie à sa base (25), délimitant la rainure en V (16).

6. Dispositif (1) selon l'une quelconque des revendications 4 ou 5, **caractérisée en ce que** l'élément de guidage (14) est équipé d'un clapet d'aiguillage (12a), à l'extrémité opposée à celle de l'enrouleur (4).

7. Dispositif (1) selon la revendication 6, **caractérisée en ce que** le clapet d'aiguillage (12a) comprend un moyen élastique permettant d'obturer la rainure rectiligne (15).

8. Dispositif (1) selon l'une quelconque des revendications 6 ou 7, **caractérisée en ce que** le clapet d'aiguillage (12a) en position ouvert, lors du retrait de la toile mobile (3), permet le passage du patin (10) dans la rainure en V (16) et son appui contre le redan (18).

9. Dispositif (1) selon l'une quelconque des revendications précédentes, **caractérisée en ce que** le patin (10) a une section de forme rectangulaire.

10. Véhicule comprenant un dispositif d'occultation (1) d'un espace de chargement selon l'une quelconque des revendications 1 à 9.

## Patentansprüche

1. Vorrichtung (1) zum Verdunkeln eines Laderaums, die ein Tuch (3) aufweist, das zwischen einer zurückgefalteten Position und mindestens zwei aufgefalteten Positionen beweglich ist, das von einem Antriebselement (6) entlang von zwei Führungsschienen (2) geführt wird, wobei das Antriebselement (6) an seinen Enden Kufen (10) trägt, die im Inneren einer durchgehenden geradlinigen Nut (15) der Schienen (2) gleiten, **dadurch gekennzeichnet, dass** die Schienen (2) eine Zwischenposition des Verlaufs der Schienen, eine Weiche (12) und eine Nut in V-Form (16), die an die durchgehende geradlinige Nut (15) anschließt, aufweisen, die geeignet ist, das Stoppen und/oder das Gleiten der Kufen (10) in einer Zwischenposition zu erlauben.

2. Vorrichtung (1) nach Anspruch 1, **dadurch gekennzeichnet, dass** der Grund der Nut in V (16) einen Absatz (18), der einen Anschlag bildet, umfasst.

3. Vorrichtung (1) nach Anspruch 2, **dadurch gekennzeichnet, dass** sich der Absatz (18) seitlich durch eine vertiefte Auslaufzone (19) verlängert.

4. Vorrichtung nach einem der vorhergehenden Ansprüche, **dadurch gekennzeichnet, dass** die Nut in V (16) durch ein Führungselement (14) abgegrenzt ist, das den zentralen Teil des V (16) bildet.

5. Vorrichtung (1) nach Anspruch 4, **dadurch gekennzeichnet, dass** das Führungselement (14) auf seiner oberen Oberfläche in der Verlängerung der geradlinigen Nut (15) geradlinig ist und eine Form im Wesentlichen eines V in seinem unteren Teil, der an seiner Basis (25) gerundet ist, der die Nut in V (16) abgrenzt, besitzt.

6. Vorrichtung (1) nach einem der Ansprüche 4 oder 5, **dadurch gekennzeichnet, dass** das Führungselement (14) mit einer Weichenklappe (12a) an dem Ende, das dem des Wicklers (4) entgegengesetzt ist, ausgestattet ist.

7. Vorrichtung (1) nach Anspruch 6, **dadurch gekennzeichnet, dass** die Weichenklappe (12a) ein elastisches Mittel umfasst, das es erlaubt, die geradlinige Nut (15) zu verschließen.

8. Vorrichtung (1) nach einem der Ansprüche 6 oder 7, **dadurch gekennzeichnet, dass** die Weichenklappe (12a) in offener Position, bei dem Zurückziehen des beweglichen Tuchs (3), die Passage der Kufe (10) in der Nut in V (16) und ihr Aufliegen gegen den Absatz (18) erlaubt.

9. Vorrichtung (1) nach einem der vorhergehenden Ansprüche, **dadurch gekennzeichnet, dass** die Kufe (10) einen Querschnitt mit rechteckiger Form hat.

10. Fahrzeug, das eine Verdunkelungsvorrichtung (1) eines Laderaums gemäß einem der Ansprüche 1 bis 9 umfasst.

## Claims

1. A device (1) for covering a loading space comprising a fabric (3) that can be moved between a folded position and at least two deployed positions, guided by a drive element (6) along two guide rails (2), the drive element (6) carrying, at the ends of same, pads (10) that slide within a continuous straight groove (15) of said rails (2), **characterized in that** said rails (2) have, at an intermediate position along the course of the rails, a switch (12) and a V-shaped groove (16) that join on the continuous straight groove (15), capable of allowing the stopping and/or the sliding of the pads (10) into an intermediate position.

2. The device (1) according to Claim 1, **characterized in that** the bottom of the V-shaped groove (16) comprises a step (18) forming a stop.

3. The device (1) according to Claim 2, **characterized in that** the step (18) extends laterally by a recessed release zone (19).

4. The device according to one of the preceding claims, **characterized in that** the V-shaped groove (16) is delimited by a guidance element (14) constituent in the central part of the V (16).

5. The device (1) according to Claim 4, **characterized in that** the guidance element (14) is straight on its upper surface in the extension of the straight groove (15) and has a substantially V-shaped form in its lower part, rounded at its base (25), delimiting the V-shaped groove (16).

6. The device (1) according to any one of Claims 4 or 5, **characterized in that** the guidance element (14) is equipped with a switching flap (12a) at the opposite end to that of the winder (4).

7. The device (1) according to Claim 6, **characterized in that** the switching flap (12a) includes an elastic means permitting the straight groove (15) to be closed.

8. The device (1) according to any one of Claims 6 or 7, **characterized in that** the switching flap (12a) in open position, during withdrawal of the movable fabric (3), permits the passage of the pad (10) in the V-shaped groove (16) and its resting against the step (18).

9. The device (1) according to any one of the preceding claims, **characterized in that** the pad (10) has a section of rectangular shape.

10. A vehicle including a device (1) for covering a loading space according to any one of Claims 1 to 9.
